# FASCICULE DE BREVET EUROPEEN

(11) **EP 3 491 326 B1**
(45) Date de publication et mention de la délivrance du brevet: **02.09.2020**
(21) Numéro de dépôt: 17742760.6
(22) Date de dépôt: 26.07.2017
(51) Int. Cl.: F28F 25/02, B01D 1/00, F25J 5/00, F28F 25/08, F28D 7/00, F28D 7/16

(54) **ECHANGEUR DE CHALEUR A TUBES VERTICAUX ET PROCEDE D'ECHANGE DE CHALEUR**
VERTIKALER ROHRWÄRMETAUSCHER UND VERFAHREN ZUM AUSTAUSCH VON WÄRME
VERTICAL TUBE HEAT EXCHANGER AND METHOD FOR EXCHANGING HEAT

(30) Priorité: 29.07.2016 FR 1657371
(43) Date de publication de la demande: 05.06.2019
(73) Titulaire: Technip France SA, 92400 Courbevoie (FR)
(72) Inventeur: RAMBURE, Nicolas, 95200 Herblay (FR)
(74) Mandataire: Lavoix
(86) Numéro de dépôt international: PCT/EP2017/068836
(87) Numéro de publication internationale: WO 2018/019865

(56) Documents cités:
- US-A1- 2012 018 133

## Description

La présente invention concerne un échangeur de chaleur à tubes adapté pour un fluide diphasique comportant au moins un liquide et sa vapeur, par exemple un mélange diphasique de propane liquide et gazeux.

L'invention concerne également un ensemble comprenant plusieurs échangeurs de chaleur de ce type.

L'invention concerne également un procédé d'échange de chaleur susceptible d'être mis en oeuvre dans un tel échangeur de chaleur.

Dans le domaine des échanges de chaleur entre un fluide diphasique et un fluide plus chaud, il est connu d'utiliser des échangeurs à tubes horizontaux parcourus par le fluide le plus chaud. De tels échangeurs sont par exemple utilisés dans un cycle frigorifique de propane, dans lequel les échangeurs servent à évaporer le propane liquide.

Toutefois, de tels échangeurs sont encombrants, car ils présentent une emprise importante au sol, surtout lorsqu'ils sont utilisés en cascade.

Un but de l'invention est donc de fournir un échangeur permettant de réduire l'emprise au sol, tout en ayant une bonne efficacité thermique.

A cet effet, l'invention concerne un échangeur de chaleur selon la revendication 1.

Selon des modes particuliers de réalisation, l'échangeur de chaleur comprend l'une ou plusieurs des caractéristiques correspondant aux revendications 2 à 7.

L'invention concerne aussi un ensemble selon la revendication 8.

Selon un mode particulier de réalisation, l'ensemble correspond à la revendication 9.

L'invention concerne enfin un procédé d'échange de chaleur selon la revendication 10.

L'invention sera mieux comprise à la lecture e la description qui va suivre, donnée uniquement à titre d'exemple et faite en se référant aux dessins annexés, sur lesquels :
- la figure 1 est une vue schématique, en section verticale, d'un ensemble selon l'invention comportant plusieurs échangeurs de chaleur selon un premier mode de réalisation,
- la figure 2 est une vue en section verticale de l'échangeur situé le plus haut sur la figure 1,
- la figure 3 est une vue schématique en section selon un plan horizontal de l'échangeur représenté sur les figures 1 et 2,
- la figure 4 est une vue schématique, en section verticale d'une partie d'un tube vertical situé dans l'échangeur représenté sur les figures 1 à 3,
- la figure 5 est une vue schématique, en section selon un plan vertical, d'un échangeur selon un deuxième mode de réalisation de l'invention, et
- la figure 6 est une vue de détail d'une portion d'un tube vertical de l'échangeur représenté sur la figure 5.

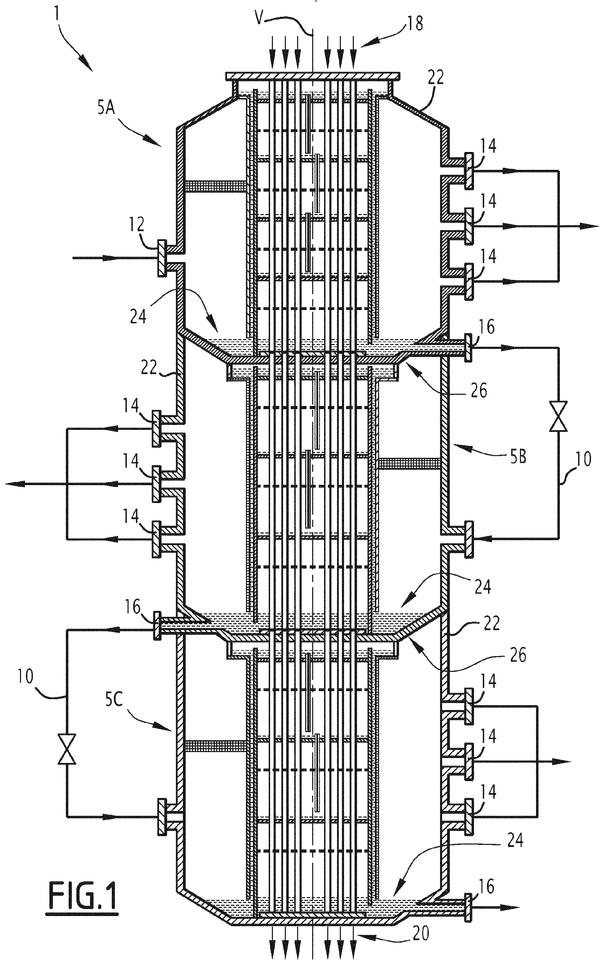

En référence à la figure 1, on décrit un ensemble 1 selon un premier mode de réalisation de l'invention.

L'ensemble 1 comprend trois échangeurs de chaleur 5A, 5B, 5C superposés selon une direction verticale V, et avantageusement un système de canalisations 10.

Selon des variantes non représentées, l'ensemble 1 comporte seulement deux échangeurs, ou bien plus de trois échangeurs superposés.

Chacun des échangeurs de chaleur 5A, 5B, 5C comprend une entrée 12 d'admission d'un fluide diphasique comportant au moins un liquide et une première vapeur, des sorties 14 pour une vapeur, et une sortie 16 pour du liquide non vaporisé.

L'ensemble 1 comprend également des entrées 18 pour admettre dans l'ensemble 1 un fluide plus chaud que le fluide diphasique, et des sorties 20 pour ce fluide.

Le système de canalisation 10 connecte fluidiquement la sortie 16 de l'échangeur 5A à l'entrée 12 de l'échangeur 5B, et la sortie 16 de l'échangeur 5B à l'entrée 12 de l'échangeur 5C.

Dans l'exemple représenté, les entrées 18 sont situées au sommet de l'ensemble 1, tandis que les sorties 20 sont situées au pied de l'ensemble.

Chaque échangeur 5A, 5B, 5C possède une enveloppe externe 22, les enveloppes externes présentant des formes complémentaires adaptées pour définir des positions relatives fixes des échangeurs de chaleur 5A, 5B, 5C les uns par rapport aux autres une fois superposés.

Par exemple, les enveloppes externes 22 définissent en partie inférieure de chaque échangeur de chaleur 5A, 5B, 5C une cuve 24, les cuves des échangeurs de chaleur 5A et 5B étant reçues respectivement selon la direction verticale V dans des réceptacles 26 formés par les enveloppes externes 22 des échangeurs de chaleur 5B et 5C.

De façon à faciliter la connexion par le système de canalisation 10, l'entrée 12 de l'échangeur 5B est située radialement par rapport à la direction verticale V à l'opposé des entrées 12 des échangeurs de chaleur 5A, 5C. De même, les sorties 14 de l'échangeur de chaleur 5B sont situées à l'opposé des sorties 14 des échangeurs de chaleur 5A, 5C.

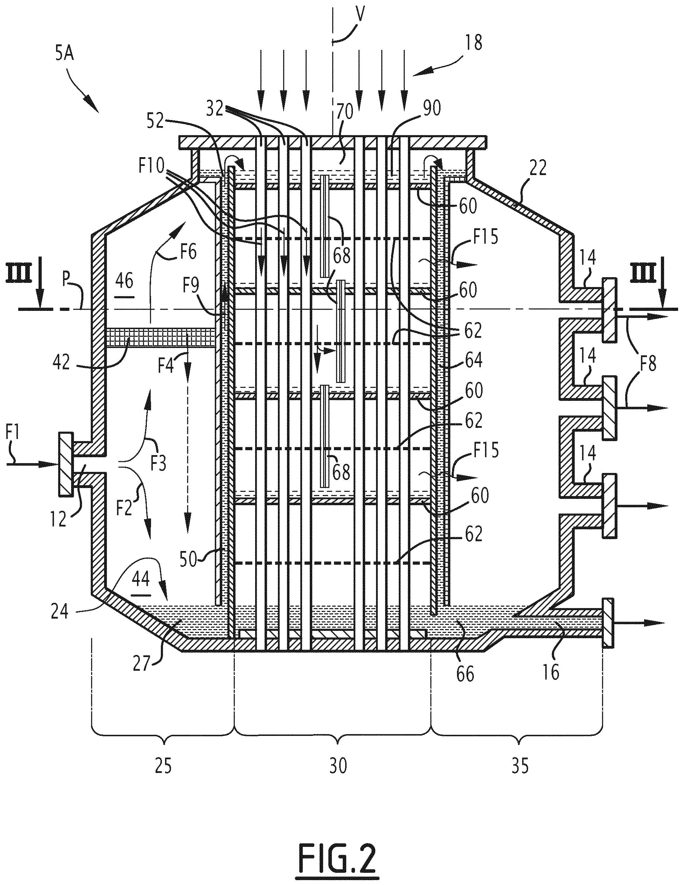

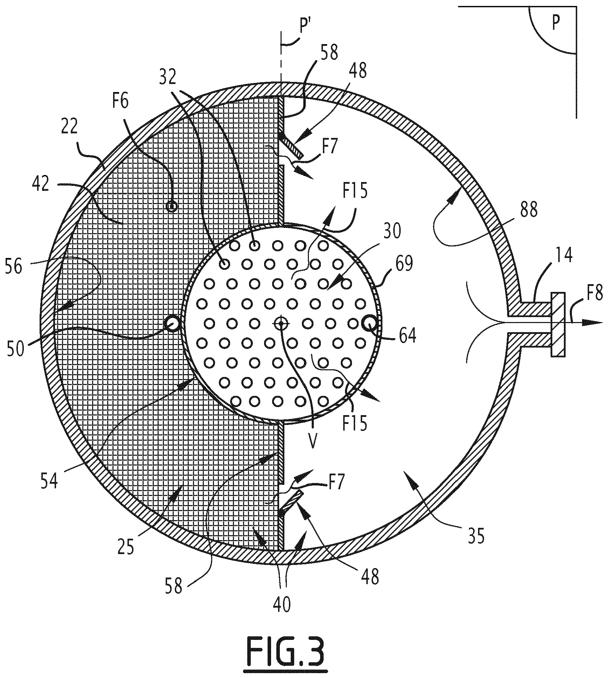

Les échangeurs de chaleur 5A, 5B, 5C étant par ailleurs sensiblement analogues structurellement les uns aux autres, seul l'échangeur de chaleur 5A sera décrit en détail ci-après en référence aux figures 2 et 3.

Le fluide diphasique est par exemple du propane.

Le fluide plus chaud est par exemple un mélange de fluides réfrigérants (en anglais *mixed refrigerant*) ou un gaz d'alimentation (en anglais *feed gas*).

Comme visible sur les figures 2 et 3, l'échangeur de chaleur 5A comprend une première chambre 25 pour recevoir le fluide diphasique par l'entrée 12 et former un bain de liquide 27 dans une partie de la cuve 24, une chambre centrale 30 comportant une pluralité de tubes 32 sensiblement verticaux et adaptée pour être alimentée à partir du bain de liquide 27 et pour vaporiser au moins partiellement le liquide, et une deuxième chambre 35 prévue pour recevoir de la vapeur en provenance de la première chambre et de la chambre centrale, la première chambre et la deuxième chambre formant ensemble un volume 40 entourant la chambre centrale autour de la direction verticale V.

La première chambre 25 comprend un premier organe de récupération 42 qui la sépare en une portion inférieure 44 comportant l'entrée 12 et le bain de liquide 27, et une portion supérieure 46 en communication fluidique avec la deuxième chambre 35 via des orifices autorégulant 48.

La première chambre 25 comprend aussi une canalisation 50 adaptée pour plonger dans le bain de liquide 27 et pour connecter fluidiquement le bain de liquide à une entrée 52 de la chambre centrale 30.

La première chambre 25 présente, en section selon un plan P sensiblement horizontal, une forme semi-annulaire. La première chambre 25 est délimitée radialement intérieurement par une enveloppe interne 54 avantageusement hémi-circulaire en section selon le plan P et verticale. La première chambre 25 est délimitée radialement extérieurement par une enveloppe externe 56, avantageusement hémicirculaire en section selon le plan P, et faisant avantageusement partie de l'enveloppe externe 22 de l'échangeur 5A.

Le premier organe de récupération 42 s'étend radialement de l'enveloppe interne 54 à l'enveloppe externe 56 et forme avantageusement une plaque sensiblement horizontale. Le premier organe de récupération 42 s'étend angulairement autour de la direction verticale V entre deux cloisons 58 de séparation de la première chambre 25 et de la deuxième chambre 35.

Les cloisons 58 s'étendent avantageusement dans un plan vertical P' et comportent les orifices autorégulant 48.

La canalisation 50 s'étend par exemple verticalement et est avantageusement située contre l'enveloppe interne 54.

Le premier organe de récupération 42 est adapté pour être traversé par une première vapeur chargée de brouillard en provenance de la portion inférieure 44 et pour renvoyer une phase liquide vers la portion intérieure. Le premier organe de récupération 42 comprend un matériau connu de l'homme du métier et décrit, par exemple, dans les documents US 3 997 303 et US 7 105 036. Un tel matériau définit des passages tortueux permettant une coalescence des gouttelettes de brouillard et leur renvoi par gravité vers la portion inférieure 44.

Selon des variantes non représentées, la première chambre 25 n'est pas hémicirculaire, mais s'étend angulairement autour de la direction verticale V selon un angle de moins de 180°, ou de plus de 180°.

Selon d'autres variantes non représentées, la première chambre 25 n'est pas délimitée radialement par des enveloppes circulaires (portions de cercle) mais présente une forme non circulaire.

La chambre centrale 30 présente une forme générale circulaire en section selon le plan P dans l'exemple représenté. Elle est traversée de part en part par les tubes 32. La chambre centrale 30 comprend avantageusement plusieurs plateaux 60 sensiblement horizontaux adaptés pour répartir le liquide entre les tubes 32.

La chambre centrale 30 comprend aussi avantageusement des grilles de maintien 62 pour maintenir les tubes 32, une canalisation 64 adaptée pour évacuer un trop-plein de liquide sur le plateau 60 le plus élevé en direction d'un bain de liquide 66 susceptible d'apparaître au fond de la chambre centrale et de la deuxième chambre 35, et des canalisations intermédiaires de trop-plein 68 adaptées pour déverser un trop-plein de liquide sur l'un des plateaux 60 vers le plateau situé immédiatement en dessous.

Les plateaux 60 sont avantageusement régulièrement espacés selon la direction verticale V.

Dans l'exemple représenté, les plateaux 60 sont au nombre de quatre dans l'échangeur de chaleur 5A, et de trois dans les échangeurs de chaleur 5B et 5C.

Selon des variantes non représentées, il peut y avoir un seul plateau, deux, trois ou plus de quatre plateaux.

Le plateau 60 le plus élevé définit un collecteur de liquide 70 dans la chambre centrale 30, le collecteur de liquide étant connecté fluidiquement au bain de liquide 27 par la canalisation 50 et au bain de liquide 66 par la canalisation 64 de trop-plein.

La chambre centrale 30 est délimitée radialement extérieurement, d'une part, par l'enveloppe interne 54 de la première chambre 25, et, d'autre part, par un second organe de récupération 69 avantageusement de forme hémicylindrique, et disposé par exemple verticalement.

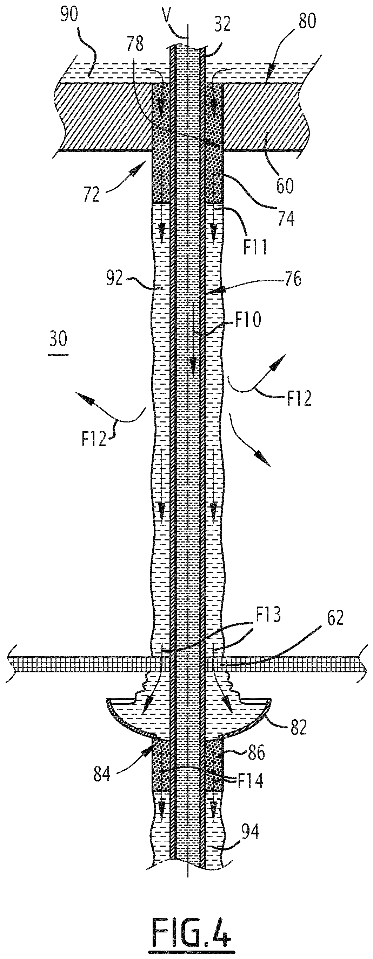

Comme visible sur la figure 4, chaque plateau 60 définit des orifices de passage 72 traversés par les tubes 32.

Des manchons 74 contenant une mousse métallique sont avantageusement installés autour des tubes 32 dans les orifices de passage 72.

Les manchons 74 s'étendent radialement depuis une surface externe 76 des tubes 32 jusqu'à un bord 78 de l'orifice de passage 72.

Par exemple, chaque manchon 74 s'étend verticalement depuis une surface supérieure 80 d'un des plateaux 60, et fait avantageusement saillie vers le bas à partir de ce plateau.

La mousse métallique est par exemple une mousse d'aluminium telle que la mousse Duocel®.

Les grilles de maintien 62 (figure 2) sont par exemple sensiblement horizontales. Les grilles de maintien 62 sont avantageusement régulièrement espacées verticalement. Chaque grille de maintien 62 est par exemple située sensiblement à égale distance de deux des plateaux 60, sauf la grille 62 la plus basse, qui est située à égale distance du plateau 60 le plus bas et de l'enveloppe externe 22.

Comme visible sur la figure 4, les grilles de maintien 62 touchent au moins certains des tubes 32.

Avantageusement, des coupelles 82 sont fixées sur les tubes 32 en dessous des zones de contact entre les grilles de maintien 62 et les tubes. Les coupelles 82 sont ouvertes vers le haut de façon à pouvoir récupérer du liquide s'écartant radialement d'un des tubes 32, et définissent un orifice de passage 84 pour les tubes 32 et le liquide.

Avantageusement, des manchons secondaires 86 contenant une mousse métallique sont disposés autour des tubes 32 immédiatement en dessous de l'orifice 84. Les manchons supplémentaires 86 sont par exemple constitués du même matériau que les manchons 74.

La deuxième chambre 35 est par exemple délimitée radialement intérieurement par le deuxième organe de récupération 69, et radialement extérieurement par une enveloppe externe 88, avantageusement sensiblement hémicirculaire selon le plan P.

Les enveloppes externes 56 et 88 forment ensemble un cylindre vertical sur au moins une partie de leur hauteur.

Les sorties 14 sont avantageusement réparties régulièrement verticalement dans la deuxième chambre 35.

La sortie 16 se situe verticalement au niveau du bain de liquide 66.

Le fonctionnement de l'ensemble 1 va maintenant être décrit.

Chacun des échangeurs de chaleur 5A, 5B, 5C fonctionne de manière analogue, si ce n'est que l'échangeur de chaleur 5A fonctionne à une pression haute, par exemple comprise entre 3 et 5 bars absolus, tandis que l'échangeur de chaleur 5B fonctionne à une pression moyenne, par exemple comprise entre 2 et 3 bars absolus, et que l'échangeur de chaleur 5C fonctionne à une pression basse, par exemple comprise entre 1 et 2 bars absolus.

Seul le fonctionnement de l'échangeur de chaleur 5A sera donc décrit en détail ci-après.

Comme visible sur la figure 2, le fluide diphasique (flèche F1) est admis par l'entrée 12 dans la portion inférieure 44 de la première chambre 25 de l'échangeur 5A. Une première séparation s'opère entre le liquide et la première vapeur. Le liquide (flèche F2) tombe dans le bain de liquide 27 qui s'est formé dans la cuve 24. La première vapeur (flèche F3) s'élève sous l'effet de la pression et traverse le premier organe de récupération 42.

Le premier organe de récupération 42 récupère le brouillard contenu dans la première vapeur et le renvoie sous forme liquide (flèche F4) vers le bain de liquide 27. Sur la figure 2, la flèche F4 est symbolique, car la récupération du brouillard se fait sous la forme de gouttelettes qui ne sont pas nécessairement canalisées et peuvent retomber en pluie dans la portion inférieure 44.

Le premier organe de récupération 42 récupère avantageusement environ au moins 99,5% en masse du brouillard contenu dans la première vapeur.

La première vapeur, débarrassée du brouillard, pénètre dans la portion supérieure 46 (flèche F6). Puis, elle franchit, avantageusement de chaque côté de la chambre centrale 30, les cloisons 58 par les orifices autorégulant 48 (figure 3, flèches F7). La première vapeur se retrouve alors dans la deuxième chambre 35 et sort par les sorties 14 (flèche F8).

Comme visible sur la figure 2, le bain de liquide 27 subit à sa surface la pression du fluide diphasique entrant dans l'échangeur de chaleur 5A et monte dans la canalisation 50 (flèche F9) pour arriver dans le collecteur de liquide 70 situé en haut de la chambre centrale 30.

Le fluide plus chaud est introduit dans l'échangeur de chaleur 5A par les entrées 18 et s'écoule verticalement, ici de haut en bas, dans les tubes 32 (flèches F10). Le fluide plus chaud passe ensuite dans l'échangeur de chaleur 5B, dont il parcourt les tubes 32, puis dans l'échangeur de chaleur 5C. Le fluide plus chaud sort de l'ensemble 1 par les sorties 20 (figure 1).

Dans le collecteur de liquide 70, le liquide forme un bain 90 (figure 4) au-dessus du plateau 60 le plus élevé. En cas de trop-plein, le bain 90 s'écoule éventuellement par l'une des canalisations intermédiaire de trop-plein 68 et se retrouve directement sur le plateau 60 situé immédiatement en dessous. En cas de trop-plein plus important, le bain de liquide 90 s'écoule par la canalisation 64 et arrive dans le bain liquide 66 situé en bas de la chambre centrale 30 et de la deuxième chambre 35.

Le bain de liquide 66 s'écoule en dehors de l'échangeur de chaleur 5A par la sortie 16 (figure 2).

Comme visible sur la figure 4, le bain de liquide 90 se répartit autour de chaque tube 32 et s'écoule à travers les orifices 72. Le liquide traverse les manchons 74, ce qui crée un film de liquide homogène 92 sur la surface externe 76 de chaque tube 32. Le film de liquide 92 s'écoule verticalement (flèche F11) en s'échauffant, les tubes 32 étant chauffés intérieurement par le fluide plus chaud. Le film de liquide 92 s'évapore au moins partiellement (flèches F12) pour donner naissance à une deuxième vapeur au sein de la chambre centrale 30.

Lorsque le film de liquide 92 rencontre éventuellement l'une des grilles de maintien 62 (flèches F13), le film de liquide est perturbé. Les coupelles 82 récupèrent le liquide, y compris si ce dernier s'est éloigné radialement du tube 32 du fait de la grille de maintien 62. Le liquide récupéré s'écoule par le ou les orifices 84 de la coupelle 82, et traverse le manchon supplémentaire 86 (flèche F14) pour former à nouveau un film de liquide 94 homogène s'écoulant le long du tube 32. Le liquide non-évaporé s'écoule ainsi jusqu'au plateau 60 suivant.

Le fonctionnement de chaque plateau 60 étant analogue, le liquide non-évaporé se retrouve *in fine* dans le bain de liquide 66 en bas de la chambre centrale 30, et passe dans la deuxième chambre 35 pour sortir par la sortie 16 (figure 2).

La deuxième vapeur apparue dans la chambre centrale 30, sous l'effet de la pression, traverse (flèches F15) le deuxième organe de récupération 69. Le brouillard éventuellement contenu dans la deuxième vapeur est récupéré sous forme liquide et s'écoule jusqu'au bain de liquide 66. La deuxième vapeur se retrouve alors dans la deuxième chambre 35 et se mélange à la première vapeur avant de sortir de l'échangeur de chaleur 5A par les sorties 14.

Comme visible sur la figure 1, le liquide sorti par la sortie 16 est envoyé par le système de canalisations 10 vers l'entrée 12 de l'échangeur de chaleur 5B, ce qui forme un nouveau fluide diphasique qui subit dans cet échangeur les mêmes étapes que le fluide diphasique dans l'échangeur de chaleur 5A, mais à une pression inférieure, qui est la pression moyenne.

Ainsi, le liquide, au fur et à mesure des étages et des échangeurs de chaleur, se vaporise progressivement sur les tubes 32 pour former une vapeur récupérée *in fine* aux sorties 14 de l'échangeur de chaleur 5C. L'éventuelle portion de liquide non vaporisé est recueillie à la sortie 16 de l'échangeur 5C.

Le fluide plus chaud quant à lui s'est refroidi progressivement en traversant les tubes 32 des échangeurs de chaleur 5A à 5C. Il sort refroidi par les sorties 20 en bas de l'échangeur de chaleur 5C.

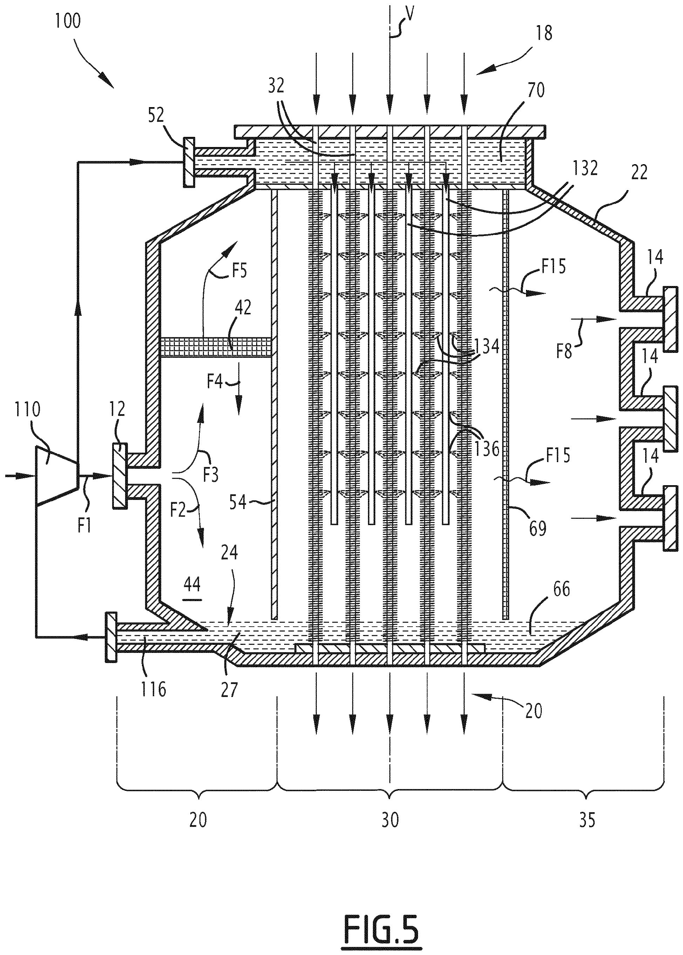

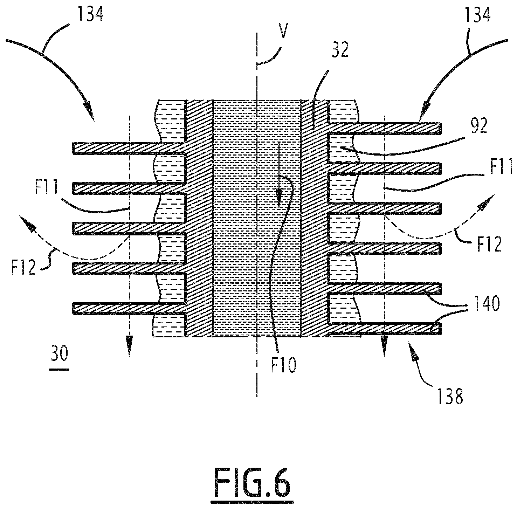

En référence aux figures 5 et 6, on décrit un échangeur de chaleur 100 selon un deuxième mode de réalisation de l'invention. L'échangeur de chaleur 100 est analogue à l'échangeur de chaleur 5A représenté sur les figures 1 à 4. Les éléments similaires portent les mêmes références numériques et ne seront pas décrits à nouveau. Seules les différences seront décrites en détail ci-après.

Dans l'exemple représenté, l'échangeur de chaleur 100 n'est pas empilé verticalement avec des échangeurs analogues. Selon une variante non représenté, il est empilé avec des échangeurs de chaleur analogues.

Il comprend une sortie 116 (figure 5) qui n'est pas située du côté de la deuxième chambre 35, mais du côté de la première chambre 25 pour faire sortir du liquide en provenance du bain de liquide 27. L'échangeur de chaleur 100 comprend en outre un compresseur 110 pour comprimer le liquide en provenance de la sortie 116 et l'injecter par l'entrée 52 dans le collecteur de liquide 70.

La chambre centrale 30 comprend des tuyaux supplémentaires 132 s'étendant verticalement à partir du collecteur de liquide 70 vers le bas pour recevoir intérieurement le liquide en provenance du collecteur de liquide 70.

Les tuyaux supplémentaires 132 sont adaptés pour former des jets externes de liquide 134 vers les tubes 32. Par exemple, les tuyaux supplémentaires 132 comportent des orifices 136 régulièrement espacés verticalement.

Les tubes 32 comportent avantageusement une structure externe de forme hélicoïdale 138 autour de la direction verticale V et formant des ailettes 140 adaptées pour récupérer les jets de liquide 134.

Le fonctionnement de l'échangeur 100 est analogue à celui de l'échangeur de chaleur 5A. Seules les différences seront décrites en détail ci-après.

Le liquide du bain de liquide 27 ne monte pas dans le collecteur de liquide 70 par une canalisation 50, mais sort par la sortie 116 pour être injecté par le compresseur 110 dans l'entrée 52.

Le liquide présent dans le collecteur liquide 70 n'emprunte pas des orifices sur un plateau, mais entre dans les tuyaux supplémentaires 132 pour former les jets de liquide 134.

Les jets de liquide 134 frappent la structure externe 138 des tubes 32 (figure 6) et sont récupérés par cette dernière pour former le film de liquide 92. Le film de liquide 92 coule sur la structure hélicoïdale (flèche F11) et se vaporise au moins partiellement (flèche F12) pour former la deuxième vapeur dans la chambre centrale 30.

Le liquide non vaporisé se retrouve dans le bain de liquide 66 qui communique avec le bain de liquide 27. De même, le liquide récupéré par le deuxième organe de récupération 69 à partir du brouillard éventuellement présent dans la deuxième vapeur se retrouve dans le bain de liquide 66, puis dans le bain de liquide 27.

Eventuellement, le compresseur 110 sert également à injecter le fluide diphasique dans l'entrée 12 (flèche F1).

Grâce aux caractéristiques décrites ci-dessus, l'ensemble 1 et l'échangeur de chaleur 100 sont très compacts et présentent une faible emprise au sol. En outre, ils sont faciles à fabriquer et présentent une grande efficacité thermique. Ils se présentent avantageusement sous la forme d'un ou plusieurs modules pouvant être standardisés.

Le premier organe de récupération 42 et l'éventuel deuxième organe de récupération 69 permettent d'éliminer un certain nombre d'équipements de la ligne de production (par exemple : le ballon avant le compresseur dans un cycle frigorifique) qui seraient recommandés, voire nécessaires, en l'absence de ces organes de récupération.

Les grilles de maintien 62 optionnelles maintiennent efficacement les tubes 32 et évitent avantageusement les vibrations.

Les coupelles 82 optionnelles permettent de réduire les effets perturbateurs des grilles de maintien 82.

Les manchons 74 et les manchons supplémentaires 86 également optionnels donnent une distribution homogène aux films de liquide 92, 94 autour de tubes 32.

Le fonctionnement de chaque plateau 60 étant analogue, le liquide non-évaporé se retrouve *in fine* dans le bain de liquide 66 en bas de la chambre centrale 30, et passe dans la deuxième chambre 35 pour sortir par la sortie 16 (figure 2).

La deuxième vapeur apparue dans la chambre centrale 30, sous l'effet de la pression, traverse (flèches F15) le deuxième organe de récupération 69. Le brouillard éventuellement contenu dans la deuxième vapeur est récupéré sous forme liquide et s'écoule jusqu'au bain de liquide 66. La deuxième vapeur se retrouve alors dans la deuxième chambre 35 et se mélange à la première vapeur avant de sortir de l'échangeur de chaleur 5A par les sorties 14.

Comme visible sur la figure 1, le liquide sorti par la sortie 16 est envoyé par le système de canalisations 10 vers l'entrée 12 de l'échangeur de chaleur 5B, ce qui forme un nouveau fluide diphasique qui subit dans cet échangeur les mêmes étapes que le fluide diphasique dans l'échangeur de chaleur 5A, mais à une pression inférieure, qui est la pression moyenne.

Ainsi, le liquide, au fur et à mesure des étages et des échangeurs de chaleur, se vaporise progressivement sur les tubes 32 pour former une vapeur récupérée *in fine* aux sorties 14 de l'échangeur de chaleur 5C. L'éventuelle portion de liquide non vaporisé est recueillie à la sortie 16 de l'échangeur 5C.

Le fluide plus chaud quant à lui s'est refroidi progressivement en traversant les tubes 32 des échangeurs de chaleur 5A à 5C. Il sort refroidi par les sorties 20 en bas de l'échangeur de chaleur 5C.

En référence aux figures 5 et 6, on décrit un échangeur de chaleur 100 selon un deuxième mode de réalisation de l'invention. L'échangeur de chaleur 100 est analogue à l'échangeur de chaleur 5A représenté sur les figures 1 à 4. Les éléments similaires portent les mêmes références numériques et ne seront pas décrits à nouveau. Seules les différences seront décrites en détail ci-après.

Dans l'exemple représenté, l'échangeur de chaleur 100 n'est pas empilé verticalement avec des échangeurs analogues. Selon une variante non représenté, il est empilé avec des échangeurs de chaleur analogues.

Il comprend une sortie 116 (figure 5) qui n'est pas située du côté de la deuxième chambre 35, mais du côté de la première chambre 25 pour faire sortir du liquide en provenance du bain de liquide 27. L'échangeur de chaleur 100 comprend en outre un compresseur 110 pour comprimer le liquide en provenance de la sortie 116 et l'injecter par l'entrée 52 dans le collecteur de liquide 70.

La chambre centrale 30 comprend des tuyaux supplémentaires 132 s'étendant verticalement à partir du collecteur de liquide 70 vers le bas pour recevoir intérieurement le liquide en provenance du collecteur de liquide 70.

Les tuyaux supplémentaires 132 sont adaptés pour former des jets externes de liquide 134 vers les tubes 32. Par exemple, les tuyaux supplémentaires 132 comportent des orifices 136 régulièrement espacés verticalement.

Les tubes 32 comportent avantageusement une structure externe de forme hélicoïdale 138 autour de la direction verticale V et formant des ailettes 140 adaptées pour récupérer les jets de liquide 134.

Le fonctionnement de l'échangeur 100 est analogue à celui de l'échangeur de chaleur 5A. Seules les différences seront décrites en détail ci-après.

Le liquide du bain de liquide 27 ne monte pas dans le collecteur de liquide 70 par une canalisation 50, mais sort par la sortie 116 pour être injecté par le compresseur 110 dans l'entrée 52.

Le liquide présent dans le collecteur liquide 70 n'emprunte pas des orifices sur un plateau, mais entre dans les tuyaux supplémentaires 132 pour former les jets de liquide 134.

Les jets de liquide 134 frappent la structure externe 138 des tubes 32 (figure 6) et sont récupérés par cette dernière pour former le film de liquide 92. Le film de liquide 92 coule sur la structure hélicoïdale (flèche F11) et se vaporise au moins partiellement (flèche F12) pour former la deuxième vapeur dans la chambre centrale 30.

Le liquide non vaporisé se retrouve dans le bain de liquide 66 qui communique avec le bain de liquide 27. De même, le liquide récupéré par le deuxième organe de récupération 69 à partir du brouillard éventuellement présent dans la deuxième vapeur se retrouve dans le bain de liquide 66, puis dans le bain de liquide 27.

Eventuellement, le compresseur 110 sert également à injecter le fluide diphasique dans l'entrée 12 (flèche F1).

Grâce aux caractéristiques décrites ci-dessus, l'ensemble 1 et l'échangeur de chaleur 100 sont très compacts et présentent une faible emprise au sol. En outre, ils sont faciles à fabriquer et présentent une grande efficacité thermique. Ils se présentent avantageusement sous la forme d'un ou plusieurs modules pouvant être standardisés.

Le premier organe de récupération 42 et l'éventuel deuxième organe de récupération 69 permettent d'éliminer un certain nombre d'équipements de la ligne de production (par exemple : le ballon avant le compresseur dans un cycle frigorifique) qui seraient recommandés, voire nécessaires, en l'absence de ces organes de récupération.

Les grilles de maintien 62 optionnelles maintiennent efficacement les tubes 32 et évitent avantageusement les vibrations.

Les coupelles 82 optionnelles permettent de réduire les effets perturbateurs des grilles de maintien 82.

Les manchons 74 et les manchons supplémentaires 86 également optionnels donnent une distribution homogène aux films de liquide 92, 94 autour de tubes 32.

## Revendications

1. Echangeur de chaleur (5A ; 100) à tubes (32) destinés à s'étendre sensiblement selon une direction verticale (V), l'échangeur comprenant :
- une première chambre (25) comportant
une portion inférieure (44) munie d'au moins une entrée (12) d'admission d'un fluide diphasique comportant au moins un liquide et une première vapeur contenant un brouillard,
une portion supérieure (46), et
un premier organe de récupération (42) adapté pour être traversé par la première vapeur et pour récupérer le brouillard sous forme d'une phase liquide renvoyée vers la portion inférieure (44), la première vapeur arrivant ensuite dans la portion supérieure (46),
- une chambre centrale (30) comportant les tubes (32) et étant adaptée pour être alimentée en ledit liquide à partir d'un bain de liquide (27) situé dans la portion inférieure (44) de la première chambre (25) et pour former des films de liquide (92, 94) coulant sur des faces externes (76) des tubes (32) et se vaporisant au moins partiellement pour former une deuxième vapeur, les tubes (32) étant parcourus intérieurement par un fluide plus chaud que le fluide diphasique, et
- une deuxième chambre (35) prévue pour recevoir la première vapeur en provenance de la portion supérieure (46) de la première chambre (25) et la deuxième vapeur, et former une troisième vapeur, la deuxième chambre (35) comportant de préférence un second organe de récupération (69) adapté pour être traversé par la deuxième vapeur et récupérer un brouillard contenu dans la deuxième vapeur, la deuxième chambre (35) comportant au moins une sortie (16 ; 116) pour le liquide non vaporisé, et au moins une sortie (14) pour la troisième vapeur,
la première chambre (25) et la deuxième chambre (35) formant ensemble un volume (40) entourant la chambre centrale autour de la direction verticale (V).

2. Echangeur de chaleur (5A ; 100) selon la revendication 1, dans lequel, en section selon un plan horizontal (P) :
- la première chambre (25) et la deuxième chambre (35) sont délimitées radialement extérieurement par des enveloppes externes (56, 88) formant un cercle, les enveloppes externes (55, 88) étant de préférence hémicirculaires,
- la première chambre (25) est délimitée radialement intérieurement par une enveloppe interne (54) formant une portion de cercle, de préférence un demi-cercle.

3. Echangeur de chaleur 5A ; 100) selon la revendication 1 ou 2, dans lequel :
- le premier organe de récupération (42) forme une plaque sensiblement horizontale séparant la portion inférieure (44) et la portion supérieure (46) de la première chambre (25), et/ou
- l'éventuel second organe de récupération (69) forme, en section selon un plan horizontal (P), une portion de cercle, de préférence hémicirculaire, et délimite radialement extérieurement une partie de la chambre centrale (30).

4. Echangeur de chaleur (5A ; 100) selon l'une quelconque des revendications 1 à 3, dans lequel :
- la première chambre (25) est délimitée radialement intérieurement par une enveloppe interne (54) étanche adaptée pour séparer le bain de liquide (27) et la chambre centrale (30), la première chambre (25) comportant au moins une canalisation (50) adaptée pour plonger dans le bain de liquide (27) et connecter fluidiquement le bain de liquide (27) à une entrée (52) de la chambre centrale, ou
- l'échangeur comprend un compresseur (115) pour remonter du liquide du bain de liquide (27) vers une entrée (12) de la chambre centrale (30).

5. Echangeur de chaleur (5A) selon l'une quelconque des revendications 1 à 4, dans lequel la chambre centrale (30) comprend un ou plusieurs plateaux (60) sensiblement horizontaux et adaptés pour répartir le liquide entre les tubes (32) et former les films de liquide (92), les plateaux (60) définissant des orifices de passage (74) traversés par les tubes, la chambre centrale (30) comportant de préférence des manchons (74) contenant une mousse métallique, les manchons (74) s'étendant radialement entre les tubes et le ou les plateaux (60) pour homogénéiser chaque film de liquide (92).

6. Echangeur de chaleur (5A) selon la revendication 5, dans lequel la chambre centrale (30) comporte au moins une grille de maintien (62) d'au moins certains des tubes (32), l'échangeur comportant des coupelles (82) fixées sur les tubes (32) concernés par le maintien pour récupérer les films de liquide (92) perturbés par la grille de maintien (62), chaque coupelle (82) définissant un orifice de passage (84) pour former un nouveau film de liquide (94), la chambre centrale (30) comportant de préférence des manchons secondaires (86) contenant une mousse métallique, chaque manchon secondaire (86) s'étendant radialement entre l'un des tubes (32) concernés et l'une des coupelles (82) pour homogénéiser le nouveau film de liquide (94).

7. Echangeur de chaleur (100) selon l'une quelconque des revendications 1 à 4, dans lequel la chambre centrale (30) comprend un collecteur de liquide (70) pour recevoir le liquide, et des tuyaux supplémentaires (132) s'étendant à partir du collecteur de liquide (70) vers le bas, de préférence verticalement, et étant adaptés pour recevoir intérieurement le liquide et former des jets de liquide (134) vers les tubes (32), les tuyaux supplémentaires (132) comportant de préférence une structure externe hélicoïdale (138) autour de la direction verticale (V) formant des ailettes (140) adaptées pour récupérer les jets de liquide (134), les films de liquide (92) coulant sur la structure externe (138).

8. Ensemble (1) comprenant plusieurs échangeurs de chaleur (5A, 5B, 5C) selon l'une quelconque des revendications 1 à 7, les échangeurs de chaleur (5A, 5B, 5C) étant superposés selon la direction verticale (V), l'ensemble (1) comportant de préférence un système de canalisations (10) en cascade pour connecter les échangeurs de chaleur (5A, 5B, 5C) entre eux.

9. Ensemble (1) selon la revendication 8, dans lequel les échangeurs de chaleur (5A, 5B, 5C) présentent des enveloppes externes (22) adaptées pour définir des positions relatives fixes des échangeurs de chaleur (5A, 5B, 5C) les uns par rapport aux autres une fois superposés.

10. Procédé d'échange de chaleur mettant en œuvre des tubes (32) s'étendant sensiblement selon une direction verticale (V), le procédé comprenant les étapes suivantes :
- fourniture d'une chambre centrale (30) comportant les tubes, ainsi que d'une première chambre (25) et d'une deuxième chambre (35) formant ensemble un volume (40) entourant la chambre centrale (30) autour de la direction verticale (V),
- admission dans une portion inférieure (44) de la première chambre (25) d'un fluide diphasique comportant au moins un liquide et une première vapeur contenant un brouillard,
- traversée, par la première vapeur, d'un premier organe de récupération (42) pour récupérer le brouillard sous forme d'une phase liquide renvoyée vers la portion inférieure (44), la première vapeur arrivant ensuite dans une portion supérieure (46) de la première chambre (25),
- alimentation en ledit liquide de la chambre centrale (30) à partir d'un bain de liquide (27) situé dans la portion inférieure (44) de la première chambre (25),
- formation de films de liquide (92) coulant sur des faces externes (76) des tubes (32) et se vaporisant au moins partiellement pour former une deuxième vapeur, les tubes (32) étant parcourus intérieurement par un fluide plus chaud que le fluide diphasique,
- réception, dans la deuxième chambre (35), de la première vapeur en provenance de la portion supérieure (46) de la première chambre (25) et de la deuxième vapeur, et formation d'une troisième vapeur,
- sortie du liquide non vaporisé par au moins une sortie (16 ; 116) de la deuxième chambre (35), et sortie de la troisième vapeur par au moins une sortie (14) de la deuxième chambre (35), et
- optionnellement, traversée d'un second organe de récupération (69), situé dans la deuxième chambre (35), par la deuxième vapeur et récupération d'un brouillard contenu dans la deuxième vapeur.

## Patentansprüche

1. Rohrwärmetauscher (5A, 32; 100, 32), der vorgesehen ist, sich im Wesentlichen gemäß einer senkrechten Richtung (V) zu erstrecken, wobei der Wärmetauscher umfasst:
- eine erste Kammer (25), die aufweist
einen unteren Teil (44), der mit einem Einlass (12) zum Einleiten eines zweiphasigen Fluids versehen ist, das mindestens eine Flüssigkeit und einen einen Nebel enthaltenden Dampf aufweist,
einen oberen Teil (46) und
ein erstes Rückgewinnungselement (42), das geeignet ist, von dem ersten Dampf durchströmt zu werden und den Nebel in Form einer flüssigen Phase wiederzugewinnen, die in den unteren Teil (44) geleitet wird, wobei der erste Dampf dann in dem oberen Teil (46) ankommt,
- eine mittlere Kammer (30), die die Rohre (32) aufweist und angepasst ist, mit der Flüssigkeit aus einem Flüssigkeitsbad (27), das in dem unteren Teil (44) der ersten Kammer (25) liegt, versorgt zu werden und einen Flüssigkeitsfilm (92, 94) zu bilden, der auf den Außenflächen (76) der Rohre (32) fließt und zumindest teilweise verdampft, um einen zweiten Dampf zu bilden, wobei die Rohre (32) innen von einem wärmeren Fluid als das zweiphasige Fluid durchströmt wird,
- eine zweite Kammer (35), die vorgesehen ist, den ersten aus dem oberen Teil (46) der ersten Kammer (25) herrührenden Dampf und den zweiten Dampf aufzunehmen, wobei die zweite Kammer (35) vorzugsweise ein zweites Rückgewinnungselement (69) aufweist, das geeignet ist, von dem zweiten Dampf durchströmt zu werden und einen in dem zweiten Dampf enthaltenden Nebel wiederzugewinnen, wobei die zweite Kammer (35) mindestens einen Auslass (16; 116) für die nicht verdampfte Flüssigkeit und mindestens einen Auslass (14) für den dritten Dampf aufweist,
wobei die erste Kammer (25) und die zweite Kammer (35) zu sammeln ein Volumen (40) bilden, das die mittlere Kammer um die senkrechte Richtung (V) herum umgibt.

2. Wärmetauscher (5A; 100) nach Anspruch 1, bei dem im Schnitt gemäß einer horizontalen Ebene (P):
- die erste Kammer (25) und die zweite Kammer (35) radial außen von einen Kreis bildenden Außenmänteln (56, 88) begrenzt sind, wobei die Außenmäntel (55, 88) vorzugsweise halbkreisförmig sind,
- die erste Kammer (25) radial innen von einem einen Teilkreis, vorzugsweise Halbkreis, bildenden Innenmantel begrenzt ist.

3. Wärmetauscher (5A; 100) nach Anspruch 1 oder 2, bei dem:
- das erste Rückgewinnungselement (42) eine im Wesentlichen horizontale Platte bildet, die den unteren Teil (44) und den oberen Teil (46) der ersten Kammer (25) trennt, und/oder
- das gegebenenfalls vorhandene zweite Rückgewinnungselement (69) in einem Schnitt gemäß einer horizontalen Ebene (P) einen Teilkreis, vorzugsweise Halbkreis, bildet und radial außen einen Bereich der mittleren Kammer (30) begrenzt.

4. Wärmetauscher (5A; 100) nach einem beliebigen der Ansprüche 1 bis 3, bei dem:
- die erste Kammer (25) radial innen von einem dichten Innenmantel (54) begrenzt ist, der angepasst ist, das Flüssigkeitsbad (27) und die mittlere Kammer (30) zu trennen, wobei die erste Kammer (25) mindestens eine Leitung (50) aufweist, die geeignet ist, in das Flüssigkeitsbad (27) zu tauchen und fluidisch das Flüssigkeitsbad (27) mit einem Einlass (52) der mittleren Kammer zu verbinden oder
- der Tauscher einen Kompressor (115) umfasst, um die Flüssigkeit des Flüssigkeitsbades (27) zu einem Einlass (12) der mittleren Kammer (30) hochzuleiten.

5. Wärmetauscher (5A) nach einem beliebigen der Ansprüche 1 bis 4, bei dem die mittlere Kammer (30) eine oder mehrere im Wesentlichen horizontale Platten umfasst, die angepasst sind, die Flüssigkeit zwischen den Rohren (32) zu verteilen und die Flüssigkeitsfilme (92) zu bilden, wobei die Platten (60) Durchgangsöffnungen (74) definieren, die von den Rohren durchquert werden, wobei die mittlere Kammer (30) vorzugsweise Hülsen (74) aufweisen, die einen Metallschaum enthalten und die Hülsen (74) sich radial zwischen den Rohren und der oder den Platten (60) erstrecken, um jeden Flüssigkeitsfilm (92) zu vereinheitlichen.

6. Wärmetauscher (5A) nach Anspruch 5, bei dem die mittlere Kammer (30) mindestens ein Gitter (62) zum Halten von mindestens einigen der Rohre (32) aufweist, wobei der Tauscher Schalen (82) aufweist, die an den vom Halten betroffenen Rohren (32) befestigt sind, um die von dem Haltegitter (62) gestörten Flüssigkeitsfilme (92) zurückzugewinnen, wobei jede Schale (82) eine Durchgangsöffnung (84) begrenzt, um einen neuen Flüssigkeitsfilm (94) zu bilden, wobei die mittlere Kammer (30) vorzugsweise Sekundärhülsen (86) aufweist, die einen Metallschaum enthalten, und jede Sekundärhülse (86) sich radial zwischen einem der betroffenen Rohre (32) und einer der Schalen (82) erstreckt, um den neuen Flüssigkeitsfilm (94) zu vereinheitlichen.

7. Wärmetauscher (100) nach einem beliebigen der Ansprüche 1 bis 4, bei dem die mittlere Kammer (30) einen Flüssigkeitssammler (70) zum Aufnehmen der Flüssigkeit und Zusatzrohre (132) umfasst, die sich von dem Flüssigkeitssammler (70) nach unten, vorzugsweise senkrecht, erstrecken und angepasst sind, innen die Flüssigkeit aufzunehmen und Wasserstrahlen (134 zu den Rohren (32) zu bilden, wobei die Zusatzrohre (132) vorzugsweise eine spiralförmige Außenstruktur (138) um die senkrechte Richtung (V) aufweisen, die Rippen (140) bildet, die angepasst sind, die Wasserstrahlen (134) aufzufangen, wobei die Flüssigkeitsfilme (92) auf der Außenstruktur (138) fließen.

8. Anordnung (1), mehrere Wärmetauscher (5A, 5B, 5C) nach einem beliebigen der Ansprüche 1 bis 7 umfassend, wobei die Wärmetauscher (5A, 5B, 5C) gemäß der senkrechten Richtung (V) übereinander angeordnet sind, wobei die Anordnung (1) vorzugsweise ein kaskadenförmiges Leitungssystem (10) aufweist, um die Wärmetauscher (5A, 5B, 5C) untereinander zu verbinden.

9. Anordnung (1) nach Anspruch 8, bei der die Wärmetauscher (5A, 5B, 5C) Außenmäntel (22) aufweisen, die angepasst sind, feststehende relative Position der Wärmetauscher zueinander zu definieren, sobald sie übereinander angeordnet sind.

10. Verfahren zum Wärmeaustausch, das Rohre (32), die sich im Wesentlichen gemäß einer vertikalen Richtung (V) erstrecken, durchführen, wobei das Verfahren die folgenden Schritte umfasst:
- Beschaffen einer die Rohre aufweisenden mittleren Kammer (30) sowie einer ersten Kammer (25) und einer zweiten Kammer (35), die zusammen ein Volumen (40) bilden, das die mittlere Kammer (30) um die senkrechte Richtung (V) umgibt,
- Einlassen eines zweiphasigen Fluids, das mindestens eine Flüssigkeit und einen ersten, einen Nebel enthaltenden Dampf aufweist, in einen unteren Teil (44) der ersten Kammer (25),
- den ersten Dampf durch ein erstes Rückgewinnungselement (42) durchströmen lassen, um den Nebel in Form einer flüssigen Phase zurückzugewinnen, die zu dem unteren Teil (44) zurückgeleitet wird, wobei der erste Dampf dann in einem oberen Teil (46) der ersten Kammer (25) ankommt,
- Versorgen der mittleren Kammer (30) mit der Flüssigkeit aus einem Flüssigkeitsbad (27), das in dem unteren Teil (44) der ersten Kammer (25) liegt,
- Bilden von Flüssigkeitsfilmen (92), die an den Außenflächen (76) der Rohre (32) entlang fließen und zumindest teilweise verdampfen, um einen zweiten Dampf zu bilden, wobei die Rohre (32) innen von einer wärmeren Flüssigkeit als das zweiphasige Fluid durchströmt werden,
- Aufnehmen des ersten Dampfes aus dem oberen Teil (46) der ersten Kammer (25) und des zweiten Dampfes in der zweiten Kammer (35) und Bilden eines dritten Dampfes,
- Auslassen der nicht verdampfen Flüssigkeit über mindestens einen Auslass (16; 116) der zweiten Kammer (35) und Auslassen des dritten Dampfes aus der zweiten Kammer (35) über mindestens einen Auslass (14) und
- optional den zweiten Dampf durch ein zweites Rückgewinnungselement (69) durchströmen lassen, das in der zweiten Kammer (35) liegt, und Rückgewinnen eines in dem zweiten Dampf enthaltenen Nebels.

## Claims

1. A heat exchanger (5A; 100) having tubes (32) intended to extend substantially in a vertical direction (V), the exchanger comprising:
- a first chamber (25) including
a lower portion (44) provided with at least one intake inlet (12) for a diphasic fluid including at least one liquid and a first vapor containing a mist,
an upper portion (46), and
a first recovery member (42) suitable for being passed through by the first vapor and for recovering the mist in the form of a liquid phase returned toward the lower portion (44), the first vapor next arriving in the upper portion (46),
- a central chamber (30) including the tubes (32) and being suitable for being supplied with said liquid from a liquid bath (27) situated in the lower portion (44) of the first chamber (25) and for forming liquid films (92, 94) running over outer faces (76) of the tubes (32) and vaporizing at least partially to form a second vapor, the tubes (32) being traveled inwardly by a fluid hotter than the diphasic fluid, and
- a second chamber (35) provided to cover the first vapor coming from the upper portion (46) of the first chamber (25) and the second vapor, and to form a third vapor, the second chamber (35) preferably including a second recovery member (69) suitable for being passed through by the second vapor and recovering a mist contained in the second vapor, the second chamber (35) including at least one outlet (16; 116) for the non-vaporized liquid, and at least one outlet (14) for the third vapor,
the first chamber (25) and the second chamber (35) together forming a volume (40) surrounding the central chamber around the vertical direction (V).

2. The heat exchanger (5A; 100) according to claim 1, wherein, in section in a horizontal plane (P):
- the first chamber (25) and the second chamber (35) are delimited radially outwardly by outer enclosures (56, 88) forming a circle, the outer enclosures (55, 88) preferably being semicircular,
- the first chamber (25) is radially inwardly delimited by an inner enclosure (54) forming a circle portion, preferably a semicircle.

3. The heat exchanger (5A; 100) according to claim 1 or 2, wherein:
- the first recovery member (42) forms a substantially horizontal plate separating the lower portion (44) and the upper portion (46) of the first chamber (25), and/or
- the optional second recovery member (69) forms, in section in a horizontal plane (P), a circle portion, preferably semicircular, and radially outwardly delimits a part of the central chamber (30).

4. The heat exchanger (5A; 100) according to any one of claims 1 to 3, wherein:
- the first chamber (25) is radially inwardly delimited by a tight inner enclosure (54) suitable for separating the liquid bath (27) and the central chamber (30), the first chamber (25) including at least one channel (50) suitable for plunging into the liquid bath (27) and for fluidly connecting the liquid bath (27) to an inlet (52) of the central chamber, or
- the exchanger comprises a compressor (115) for raising liquid from the liquid bath (27) toward an inlet (12) of the central chamber (30).

5. The heat exchanger (5A) according to any one of claims 1 to 4, wherein the central chamber (30) comprises one or several substantially horizontal plates (60) suitable for distributing the liquid among the tubes (32) and forming the liquid films (92), the plates (60) defining passage orifices (74) passed through by the tubes, the central chamber (30) preferably including sleeves (74) containing a metal foam, the sleeves (74) extending radially between the tubes and the plate(s) (60) to homogenize each liquid film (92).

6. The heat exchanger (5A) according to claim 5, wherein the central chamber (30) includes at least one grid (62) holding at least some of the tubes (32), the exchanger including cups (82) fastened on the tubes (32) in question to recover the liquid films (92) disrupted by the holding grid (62), each cup (82) defining a passage orifice (84) to form a new liquid film (94), the central chamber (30) preferably including secondary sleeves (86) containing a metal foam, each secondary sleeve (86) extending radially between one of the tubes (32) in question and one of the cups (82) to homogenize the new liquid film (94).

7. The heat exchanger (100) according to any one of claims 1 to 4, wherein the central chamber (30) comprises a liquid collector (70) to receive the liquid, and additional hoses (132) extending from the liquid collector (70) downward, preferably vertically, and being suitable for inwardly receiving the liquid and forming liquid jets (134) toward the tubes (32), the additional hoses (132) preferably including a helical outer structure (138) around the vertical direction (V) forming fins (140) suitable for recovering the liquid jets (134), the liquid films (92) running over the outer structure (138).

8. An assembly (1) comprising several heat exchangers (5A, 5B, 5C) according to one of claims 1 to 7, the heat exchangers (5A, 5B, 5C) being superimposed in the vertical direction (V), the assembly (1) preferably including a system of cascading channels (10) to connect the heat exchangers (5A, 5B, 5C) to one another.

9. The assembly (1) according to claim 8, wherein the heat exchangers (5A, 5B, 5C) have outer enclosures (22) suitable for defining fixed relative positions of the heat exchangers (5A, 5B, 5C) with respect to one another once superimposed.

10. A heat exchange method implementing tubes (32) extending substantially in a vertical direction (V), the method comprising the following steps:
- providing a central chamber (30) including the tubes (32), as well as a first chamber (25) and a second chamber (35) together forming a volume (40) surrounding the central chamber (30) around the vertical direction (V),
- allowing, into a lower portion (44) of the first chamber (25), a diphasic fluid including at least one liquid and a first vapor containing a mist,
- crossing, by the first mist, of a first recovery member (42) to recover the mist in the form of a liquid phase returned toward the lower portion (44), the first mist next arriving in an upper portion (46) of the first chamber (25),
- supplying said liquid to the central chamber (30) from a liquid bath (27) situated in the lower portion (44) of the first chamber (25),
- forming liquid films (92) running over outer faces (76) of the tubes (32) and vaporizing at least partially to form a second vapor, the tubes (32) being traveled inwardly by a fluid hotter than the diphasic fluid,
- receiving, in the second chamber (35), the first vapor coming from the upper portion (46) of the first chamber (25) and the second vapor, and forming a third vapor,
- removing non-vaporized liquid via at least one outlet (16; 116) of the second chamber (35), and removing third vapor via at least one outlet (14) of the second chamber (35), and
- optionally, crossing of a second recovery member (69), situated in the second chamber (35), by the second vapor and recovery of a mist contained in the second vapor.
